# EUROPEAN PATENT APPLICATION

(11) **EP 1 967 494 A1**
(43) Date of publication of application: **10.09.2008**
(21) Application number: 06791074.5
(22) Date of filing: 22.09.2006
(51) Int. Cl.: C01B 33/149, D21H 17/69, D21H 21/10

(54) **REMOVAL OF COLLOIDS AND SOLUBLE SUBSTANCES USING CATIONIC NANOPARTICLES IN THE PAPERMAKING PROCESS**

(30) Priority: 26.09.2005 CN 200510104998
(71) Applicant: Deng, Li, Jilin 137000 (CN)
(72) Inventor: Deng, Li, Jilin 137000 (CN)
(74) Representative: Grundmann, Dirk
(86) International application number: PCT/CN2006/002484
(87) International publication number: WO 2007/033601

(57) **Abstract**

There are provided the cationic nanoparticle sols and a papermaking method using the same, more particularly, the cationic nanoparticle sols are used to remove dissolved and colloidal substances during papermaking, and retain them with paper product, wherein the cationic nanoparticles have a specific surface area of 200 m²/g to 5000 m²/g, and the mole ratio of aluminum to surface silica is 1:8 to 30:1.

## Description

### CROSS-REFERENCE TO RELATED APPLICATIONS

The present application is a continuation of pending International patent application PCT/CN2006/002484 filed on September 22, 2006 which designates the United States and claims priority from Chinese patent application 200510104998.0 filed on September 26, 2005, the content of which is incorporated herein by reference.

### FIELD OF THE INVENTION

The present invention is concerning cationic nano-particle sols and their use for papermaking. It is a method to use cationic nano-particle sols to remove the contaminants (dissolved and colloidal substances) in aqueous and retain them with paper product.

### BACKGROUND OF THE INVENTION

With the water system closure, the contaminants (dissolved and colloidal substances will be accumulated to the serious detriment of papermaking process and the final product. Furthermore, the discharge of un-purified white water will pollute environment.

At present, the technology widely applied in paper industry for treating the anionic contaminants is on-line chemical treatment, which is through applying anionic trash catchers--cationic poly-electrolytes to remove dissolved and colloidal substances from water phase. The cationic poly-electrolytes can be cationic low molecular weight, high-charged density organic polymers such as cationic polyamine, polyethyleneimine (PEI), cationic ploy-DADMAC,PAM, Polyethylene oxide (PEO) etc. Moreover, different aluminum compounds are often present in pulp furnish, including AlCl₃, Al(NO₃)₃, poly-aluminum compounds and the mixture of them. Poly-aluminum complexes may contain chloride, sulfate, phosphate and various anions.People also explore inorganic fillers to function as anionic trash catchers such as talc, kaolin, precipitated calcium carbonate etc. However, white water can not be effectively purified through the above treatments.

### SUMMARY OF THE INVENTION

According to the present invention, it is the method to use cationic nano-particles to purify white water--better be cationic nano-silica particles to remove dissolved and colloidal substances from pulp suspension and retain them with paper product.

The main mechanism is thought that cationic nano-particles remove DCS through electro-neutralization, particle bridging flocculation, electrostatic attraction or the synthesized role of them.

### DETAILED DESCRIPTION OF THE INVENTION

According to the present invention, a cationic nano-particle sol is offered, preferably cationic silica sols, the surface area of the stated particles is big than 500 m²/g to 5000 m²/g, preferably 600 m²/g to 5000 m²/g, more preferably 800 m²/gto 5000 m²/g, most preferably 1000 m²/g to 5000 m²/g. And the aluminum to surface SiO₂ mol ratio is 1:8 to 30:1, preferably 1:1 to 30:1,more preferably 5:1 to 30:1,most preferably 10:1 to 30:1.

According to the present invention, another cationic nano-particle sol is offered, preferably cationic silica sols, the surface area of the stated particles is big than 200 m²/g to 5000 m²/g, preferably 500 m²/g to 5000 m²/g,more preferably 800 m²/g to 5000 m²/g, most preferably 1000 m²/g to 5000 m²/g. And the aluminum to surface SiO₂ mol ratio is 1:1 to 30:1, preferably 3:1 to 30:1,more preferably 5:1 to 30: 1, most preferably 10:1 1 to 30:1.

The cationic charge of particles is produced by cationic species coated on the surface such as metal species. The preparation method is disclosed such as in the US Pat. Nos. 3,007,878, 3,719,607. The methods for preparing cationic silica sols usually involve that the nano-particle sols are reacted with a basic salt of a polyvalent (a valency of 3-4) metal to give the sol particle a cationic surface charge. And stabilizers are boric acid, phosphate, alkali metal bases, alkaline earth metal bases, ammonia etc. The trivalent metals in the salt are aluminum, chromium, gallium, indium, or thallium. And tetravalent metals are titanium, germanium, zirconium, stannic tin, cerium, hafnium, and thorium. The anions of stronger acids in the metal salts such as Cl⁻¹, NO₃⁻¹, Br⁻¹ and CH₃CH₂OO⁻¹ etc are preferably chosen. Aluminum salt is preferably due to its low price.

According to the present invention, the cationic nano-particle sol is acidic, pH is low than 7.

The nano-particle sols are suitably diluted to a concentration of from 0.1 to 2 % by weight before addition to the pulp suspension. Preferably from 0.5 to 1.5 % by weight, more preferably from 0.5 to 1 % by weight. The dilution agent is water. The amounts of cationic nano-silica particles are from 0.1 kg/ton to 20 kg/ton by weight of cationic silica, as dry, based on the weight of dry fibers, preferably from 1 kg/ton to 6 kg/ton, more preferably from 1 kg/ton to 3 kg/ton.

According to the present invention, the preparation of cationic nano-particles sols includes: that silica sols, or acidic deionized silica sols or acidic polymeric silicic acid is reacted with a basic salt of polyvalent metal. The ratio of metal atoms in the salt to silica in the aqueous is from 2×10⁻⁵ A :1 to 2×10⁻³ A :1,where A is the surface area of particles in the aqueous sol m²/g.The reaction is conducted under heating until the pH remains constant. Then the mixture is stabilized by adding stabilizer.

The present invention can be used for various fiber pulp for papermaking stock. The fiber pulp can be chemical or mechanical pulp of softwood and hardwood such as sulfate pulp, sulfite pulp, thermomechanical pulp(TMP), Groundwood pulp/Stone Groundwood pulp, Refiner Groundwood pulp (RMP), Chemi-mechanical pulp and the recycle pulp and nonwood pulp can also be used. Papermaking stock can contain conventional filler such as kaolin, TiO₂, Talc, gypsum, precipitated calcium carbonate (PCC)/ ground calcium carbonate (GCC), etc. and the additives such as dry strength agent, wet strength agent, dye etc. The cationic nanoparticle sols should be added to pulp suspension before filler, pH of pulp suspension is 4-9, consistency of pulp suspension can be 0.2%-3.5% by weight. The removed DCS is retained with paper sheet. The present invention can be used in combination with any other organic aids and additives.

By applying the present invention, the dissolve and colloidal substances in the aqueous are removed but no negative effects to paper quality. 50% COD is reduced, 70%-80% cationic nano-particles is retained with paper sheets. The retention of fiber pulp and the operation of paper production is improved. Less amount of cationic nano-particles sols can bring a high efficiency and the manipulating is easy. The present invention is widely suitable to various paper and paperboard production under various conditions.

### Example 1

Fiber pulp is 100% spruce TMP. With HCl and NaOH, the pulp suspension is adjusted to 6.5. Cationic nano-particle sol A contains 5.9% Al₂O₃ by weight and 9.9% SiO₂ % by weight. Cationic nano-particle sol B contains 25.9 % Al₂O₃ by weight and 3.9 % SiO₂ % by weight. The dosage is calculated based on dry weight of cationic nano-particle sols and fiber pulp. Under 1000 rpm stirring, cationic nano-particle sols are added to dynamic drainage jar with the closed exit. The pulp suspension is agitated for 3 mins. 100 ml of first-pass filtrate is collected and the water sample of DCS is obtained by centrifugation. COD is measured following the standard method SCAN-CM 45:91. The results are shown in table 1

**Table 1**

| A dosage kg/ton | COD mg/l | COD removal % |
|---|---|---|
| 0 | 263.5 | 0.0 |
| 1.05 | 250.5 | 4.9 |
| 2.0 | 195 | 29 |
| 3.0 | 140 | 49 |

| B dosage kg/ton | COD mg/l | COD removal % |
|---|---|---|
| 0 | 219.5 | 0.0 |
| 3.0 | 199.4 | 9.2 |
| 4.5 | 143 | 34.7 |
| 9.0 | 118.7 | 45 |

### Example 2

Cationic nanoparticle sol A is used, fiber pulp is 100% spruce TMP. With HCl and NaOH, the pH of pulp suspension is adjusted to 8.5. Other steps are the same as those in example 1. The results are shown in table 2

**Table 2**

| A dosage kg/ton | COD mg/l | COD removal % |
|---|---|---|
| 0 | 244.16 | 0.0 |
| 1.6 | 208.32 | 14.68 |
| 3 | 129.92 | 47.78 |

### Example 3

Cationic nanoparticle sol A is used, fiber pulp is 100% spruce TMP, the consistency of pulp suspension is 2- 10 g/I. The pH of pulp suspension is 4-9. The other steps are the same as those in example 1. The COD removal increases 10-26 %.

### Example 4

Cationic nanoparticle sol A is added to fiber pulp suspension, the consistency of pulp suspension is 1.63 g/I. The handsheets are formed in sheetmaking mould of laboratory. The retention of SiO₂ and paper properties are measured following the standard method SCAN-P. Fiber pulp is spruce TMP, Kraft pine pulp, and the mixture of the spruce TMP and kraft pine pulp respectively. The dosage of cationic nano-particle sol A is 0.5- 3 kg/ton. The retention of SiO₂ in the handsheets is about 70%-85%. The paper properties are not obviously changed.

## Claims

1. It is related to the cationic silica sols, especially cationic silica particles sols, the surface area of the said particles is big than 500 m²/gto 5000 m²/g, and the mol ratio of cationic polyvalent metal /silica on the surface is 1:8 to 30:1.

2. The surface area of said particles in claim 1 is 600 m²/g to 5000 m²/g, preferably 800 m²/g to 5000 m²/g, more preferably 1000 m²/g to 5000 m²/g.

3. The mol ratio of polyvalent metal /silica on the surface of cationic particles in claim 1 is 1:1 to 30:1, preferably 5:1 to 30: 1, more preferably 10:1 to 30: 1.

4. It is related to the cationic silica sols, especially cationic silica sols, the surface area of the said particles is big than 200 m²/g to 5000 m²/g, and the mol ratio of cationic polyvalent metal /silica on the surface is 1:1 to 30:1.

5. The surface area of said particles in claim 4 is 500 m²/g to 5000 m²/g, preferably 800 m²/g to 5000 m²/g, more preferably 1000 m²/g to 5000 m²/g.

6. The mol ratio of polyvalent metal /silica on the surface of cationic nano-particles in claim 4 is 3:1 to 30:1,preferably 5:1 to 30: 1,more preferably 10:1 to 30: 1.

7. The cationic surface charge in any of cationic nano-particles in claim 1-6, is produced by cationic chemical components such as cationic metal ions coated on the surface.

8. The metal ions in claim 7 are in the salts of polyvalent metals.

9. The polyvalent metals in claim 8 include the trivalent metals in the salt chosen from aluminum, chromium, gallium, indium, or thallium and tetravalent metals chosen from titanium, germanium, zirconium, stannic tin, cerium, hafnium, and thorium.

10. The polyvalent metal in claim 9 is aluminum.

11. The basic metal salts in claim 8 include stronger anionic ions chosen from HCl, HNO₃, HBr and CH₃CH₂OOH.

12. It is a method to remove dissolved and colloidal substances from water phase by adding any cationic nano-particles in claim 1-6 into fiber pulp suspension.

13. The fiber pulps in claim 12 include mechanical pulp, chemical pulp or chemi-mechanical pulp of softwood and hardwood, and recycled pulp or non-wood pulp.

14. The pH of fiber pulp suspension is 4-9, the consistency is 0.2% to 3.5% by weight.

15. The dosage of cationic nano-particles sols in claim 12 is 0.1-20 kg/ton, preferably 1-6 kg/ton, more preferably 1-3 kg/ton or less, based on the dry weight of cationic silica particles sols and fiber pulp.

16. It is a method to remove dissolved and colloidal substances from water phase by adding cationic nano-particles sols into fiber pulp suspension, the surface area of said cationic nano-particles sols is 220 m²/g to 500 m²/g, and the mol ratio of cationic polyvalent metal/ si on the surface is smaller than 1:1.

## Amended claims

### Amended claims under Art. 19.1 PCT

1. It is a method for improving paper production, to add cationic nano-particle sols into pulp suspension and quickly mix. The dissolved and colloidal substances in aqueous is retained with papermaking stock together in the paper product.

2. The pulp suspension in claim 1 is the pulp suspension unmixed with fillers. The pulp is mechanical pulp, chemical pulp, chemi-mechanical pulp, recycled pulp or non-wood pulp. pH is 4-9, the consistency of pulp suspension is 0.2% -3.5% or more.

3. The papermaking stock in claim 1 comprises cellulose fibers at least 50% by weight of the total solid in the stock, contains or do not contain conventional fillers, aids and additives.

4. The said cationic nano-particles in claim 1 are the cationic nano-silica particles, the surface area of said cationic silica particles is 200 m²/g to 5000 m²/g, the cationic surface charge of particles is produced by coating cationic chemical components on the surface.

5. The said cationic nano-silica particles in claim 4 is modified by a basic salt of polyvalent metal giving the surface of silica particles a positive charge, especially the salt of metal with low price such as polyvalent aluminum, the mol ratio of Al/Si on the surface is 1:8 to 30:1.

6. The dosage of cationic nano-silica particle sols in claim 1 is 0.1-20 kg/ton, based on the dry weight of cationic nano-silica particle sols and fiber pulp suspension.
